# EUROPEAN PATENT SPECIFICATION

(11) **EP 4 577 767 B1**
(45) Date of publication and mention of the grant of the patent: **08.07.2026**
(21) Application number: 22769525.1
(22) Date of filing: 23.08.2022
(51) Int. Cl.: F16L 41/08, F16L 41/12

(54) **BLOCK FITTING ASSEMBLY WITH SEAL STRUCTURE ET METHODE DE FABRICATION**
BLOCKMONTAGEANORDNUNG MIT DICHTUNGSSTRUKTUR UND HERSTELLUNGSVERFAHREN
ENSEMBLE D'AJUSTEMENT DE BLOC AVEC STRUCTURE D'ÉTANCHÉITÉ ET METHODE DE FABRICATION

(43) Date of publication of application: 02.07.2025
(73) Proprietor: TI Group Automotive Systems, LLC, Auburn Hills MI 48326 (US)
(72) Inventor: BROCK, Jonathan, Bloomfield Twp., MI 48302 (US); SPRYGADA, Benjamin, Allen, Battle Creek, MI 49015 (US); STIEBER, Matthew, Grosse Pointe, MI 48230 (US)
(74) Representative: Novagraaf Group
(86) International application number: PCT/US2022/075321
(87) International publication number: WO 2024/043928

(56) References cited:
- EP-A1- 3 901 506
- DE-B3- 10 241 921
- US-A- 3 869 153

## Description

### FIELD

The present disclosure relates to a block fitting for a fluid line system in a motor vehicle. In particular, the present disclosure relates to the block fitting having a sealing component for making a fluid tight connection in a motor vehicle.

### BACKGROUND

The statements in this section merely provide background information related to the present disclosure and may not constitute prior art.

Connection arrangements are generally used in a fluid line assembly in a motor vehicle including an electric vehicle (EV) and a hybrid vehicle. In particular, the connection arrangements are used in air conditioning systems, cooling systems (e.g., coolant circuits), valve units, and pump units. The design has to be particularly compact and lightweight in a limited space, and also the pipe or tube connections in the air conditioning systems may be comprised of metallic, rubber, and plastic materials. In addition, the pipe or tubes are attached via block fittings including adapters, which are provided with sealing elements. Accordingly, it is necessary to connect the block fittings and/or the adapters firmly and with durable sealing both to the pipe and detachably to a further pipe or to another component in the air conditioning system. However, in addition to high pressures and temperatures, vibrations occur and are transmitted within the components of the air conditioning system. The connection arrangements used in the air conditioning system, therefore, have to be constructed in such a way that a durable connection is provided in spite of vibrations, corrosive media, high temperatures and high pressures, and that fluid leakage cannot occur.

For example, vehicular air conditioning systems contain one of a variety of environmentally acceptable refrigerants (e.g., CO2 (R-744) or fluorinated hydrocarbon). One of the concerns about the release of the refrigerants into the atmosphere has led to regulations that mandate operation of refrigeration systems with substantially no leaks. Further, another concern about the release of the refrigerants into the system has led to the failure of the air conditioning system due to the leakage. The tubes that make up the piping in these systems may be connected to one another at certain junctions using the block fitting and/or the adapter as described above. To connect opposing tubes, each tube is attached to a respective element of the block fitting including the adapter, and the two blocks are then connected to one another. The joint is sealed by at least one seal member of deformable metal or other suitable material. Typically, vehicular air conditioning systems include components from several sources assembled by the OEM. It is common for one block of a block fitting to be integral with a major system component such as a compressor or condenser and the mating fitting element part of the line set. Modern assembly procedures mandate simplified component delivery and handling.

Further, it is important that the fluid line system such as the air conditioning system in the vehicles is constructed to be lightweight and also durable in a limited space. However, we have discovered that the number of fastening means fixing together the components of the fluid line system are limited, and also it is difficult to configure the block fittings and/or the adapters for providing durable sealing of the connection arrangements for making a secure connection (i.e., a fluid-tight connection) in the fluid line system. To effectively arrange the sealed and secured fluid line in the vehicle, a number of devices and methods for the connection arrangements including the block fittings are continuously developed and used in various fluid line systems.

EP 3 901 506 A1 shows a pipe connection arrangement for a heat exchanger, comprising a pipe, a block fitting, a flange and a seal.

### SUMMARY

The present disclosure relates to a block fitting device for a fluid line system in a motor vehicle including an electric vehicle and a hybrid vehicle. For example, the block fitting device can be used for connecting sections in a refrigeration system. According to an exemplary form of the present disclosure, the block fitting device for making a secure connection in the fluid line system includes an adapter body having a passage with two outlets and an adapter bead radially and outwardly formed around the adapter body, a primary block formed with at least one bore along a longitudinal axis and an inward directed step around the at least one bore to receive the adapter body, a mating block having at least one mating bore and being securely coupled with the primary block and the adapter body, and a seal washer having an inner seal member and an outer seal member and being placed in the inward directed step for a sealing contact with the adapter body and the primary block in an assembled configuration. Further, the primary block and the adapter body are joined together and the at least one bore and the passage are aligned and communicated to define a fluid channel along the longitudinal axis.

According to a further aspect of the present disclosure, the seal washer includes a body portion having an inner radial channel to receive the inner seal member and an outer radial channel to receive the outer seal member. The inward directed step of the primary block includes a stepped annular surface radially formed around a first bore and an inner radial surface formed substantially perpendicular to the stepped annular surface. The stepped annular surface defines a diametric dimension greater than a diametric dimension of the first bore.

According to a further aspect of the present disclosure, in the assembled configuration, the seal washer is disposed between a stepped annular surface formed in the inward directed step and a first surface of the adapter bead along the longitudinal axis. The inner seal member of the seal washer is frictionally engaged with a first radial outer surface of the adapter body and the outer seal member of the seal washer is frictionally engaged with an inner radial surface formed in the inward directed step of the primary block such that the seal washer is adapted to seal the fluid channel in a radial direction relative to the longitudinal axis. An outer diametric dimension about an outer edge of the outer seal member is larger than a diametric dimension of a stepped annular surface, and an inner diametric dimension about an outer edge of the inner seal member is smaller than a diametric dimension of the first radial outer surface of the adapter body. Further, the block fitting device has a first radial gap defined between a stepped annular surface of the primary block and a first plane surface of the seal washer, and a second radial gap defined between a second plane surface of the seal washer and a first surface of the adapter bead.

According to a further aspect of the present disclosure, the seal washer has a body portion formed a metallic material or a polymer material. The inner and outer seal members of the seal washer are each formed of an elastomeric material.

According to a further aspect of the present disclosure, in the assembled configuration, a first outlet of the adapter body is inserted into a first bore of the primary block to connect with the passage of the adapter body defined as the fluid channel along the longitudinal axis. The adapter bead of the adapter body is positioned in the inward directed step of the primary block such that the first surface of the adapter bead is faced substantially parallel to a stepped annular surface of the primary block.

According to a further aspect of the present disclosure, the primary block with the adapter body and the mating block are securely coupled with a fastening member inserted through a second mating bore formed in the mating block and tightened in a second bore formed in the primary block.

According to a further aspect of the present disclosure, the primary block includes a first aperture extending from a planar outer end surface and receiving a first tube in a firmly bonded manner and a second aperture having the inward directed step formed in planar inner end surface. The mating block includes a first mating bore to couple with a second outlet of the adapter body and the second outlet of the adapter body receives a second tube.

According to a further aspect of the present disclosure, the method of assembling the block fitting device for making a secure connection in a fluid line system includes the steps of providing an adapter body formed with a passage with at least two outlets and an adapter bead, providing a primary block formed with a first bore along a longitudinal axis and an inward directed step formed around the first bore, providing a seal washer having an inner seal member and an outer seal member, placing the seal washer between the primary block and the adapter body along the longitudinal axis, inserting a first outlet of the adapter body into the first bore of the primary block such that the first bore and the passage are aligned and communicated to define a fluid channel along the longitudinal axis, providing a mating block having at least one mating bore, and coupling securely a second outlet of the adapter body with a first mating bore of the mating block. Further, the method further includes the step of inserting a fastening member through a second mating bore formed in the mating block to be securely engaged in a second bore formed in the primary block.

Further details and benefits will become apparent from the following detailed description of the appended drawings. The drawings are provided herewith purely for illustrative purposes and are not intended to limit the scope of the present disclosure.

The invention is defined in the appended claims.

### BRIEF DESCRIPTION OF THE DRAWINGS

In order that the disclosure may be well understood, there will now be described various forms thereof, given by way of example, reference being made to the accompanying drawings, in which:
FIG. 1 shows a perspective view of a block fitting device including a primary block and a mating block in accordance with an exemplary embodiment of the present disclosure;
FIG. 2 shows an exploded view of the exemplary block fitting device of FIG. 1;
FIG. 3 shows a cross-sectional view of the block fitting device including two tubes of FIG. 1;
FIG. 4 shows a detailed view of the block fitting device including a seal washer located between the primary block, an adapter, and the mating block of FIG. 1;
FIG. 5 shows the seal washer located inside the block fitting device in accordance with an exemplary embodiment of the present disclosure; and
FIG. 6 shows a cross-sectional view of the seal washer, taken along line A-A in FIG. 5.

The drawings described herein are for illustration purposes only and are not intended to limit the scope of the present disclosure in any way.

### DETAILED DESCRIPTION

The following description is merely exemplary in nature and is in no way intended to limit the present disclosure or its application or uses. It should be understood that throughout the drawings, corresponding reference numerals indicate like or corresponding parts and features.

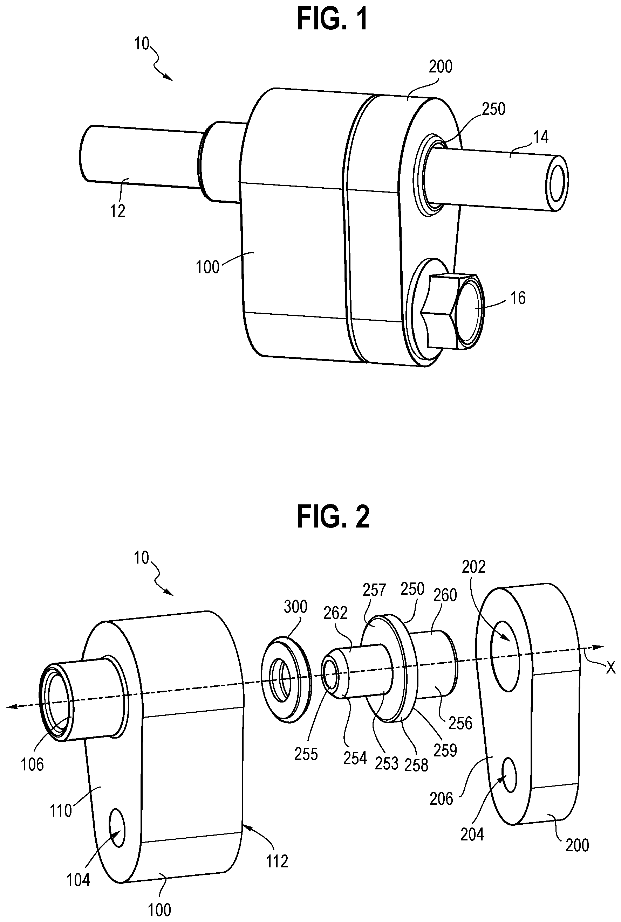

FIG. 1 shows a side view of a block fitting device 10 connected to tubes or hoses, and FIG. 2 shows an exploded view of the block fitting device 10. As illustrated, the block fitting device 10 includes a primary block 100, a mating block 200, an adapter body 250, and a seal washer 300 joined together as an assembled configuration and also generally define boundary surfaces, which are brought into facing relation to form a fluid tight connection of tubes 12 and 14 aligned a longitudinal axis X. In FIGS. 1 and 2, though illustrated as joining the spaced tube sections 12 and 14 as an exemplary embodiment of the present disclosure, the block fitting device 10 could join one of the tubes 12 and 14 to a system component such as a compressor or evaporator or other elements (not shown).

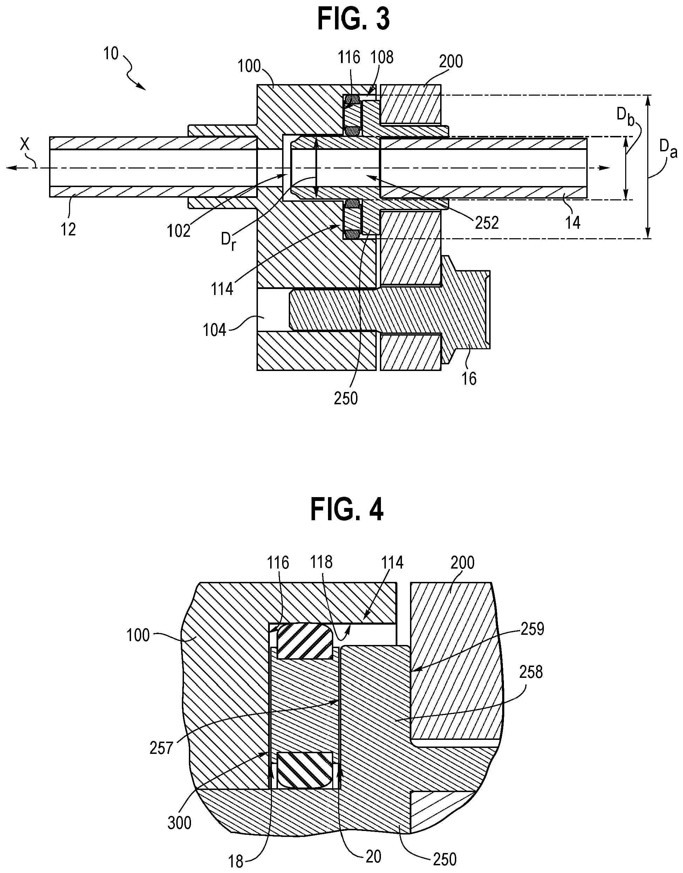

FIG. 3 shows a cross-sectional view of the block fitting device 10 connected to the tubes 12 and 14. As shown in FIGS. 1 through 3, the primary block 100 includes a first bore 102 and a second bore 104, each of which are substantially circular in cross-section and extend through the thickness of the primary block 100. The first bore 102 defines a fluid channel through the primary block 100 and the second bore 104 is configured to receive a fastening member 16 as will be explained below. In accordance with other forms of the present disclosure, the first and second bores 102 and 104 may also be formed to asymmetrical, non-circular, or to have radially projecting portions. The primary block 100 includes a first aperture 106 and a second aperture 108 communicating to each other through the first bore 102. Further, for example, the primary block 100 might be a part or a component of the fluid line system in the vehicle. In addition, as shown in FIGS. 1 through 3, the first aperture 106 formed with a substantially circular shape extends from a planar outer end surface 110 to receive a first tube 12 such that the first tube 12 is inserted into the first aperture 106 and is securely connected to the primary block 100 in a firmly bonded manner.

Further, the second aperture 108 formed on a planar inner end surface 112 includes an inward directed step 114 that defines a stepped annular surface 116 to receive the adapter body 250. As shown in FIG. 3, the stepped annular surface 116 of the second aperture 108 is radially formed around the first bore 102 relative to the longitudinal axis X. In addition, the stepped annular surface 116 has a diametric dimension *Dₐ*, which is greater than a diametric dimension *D_{b}*, of the first bore 102.

In FIGS. 2 and 3, the adapter body 250 has a passage 252 as a fluid channel formed in a straight shape along the longitudinal axis X. When the primary block 100 and the adapter body 250 are joined together, the first bore 102 of the primary block 100 and the passage 252 of the adapter body 250 are aligned and communicated to define the fluid channel along the longitudinal axis. Further, as shown in FIG. 2, the adapter body 250 includes at least two outlets such as a first outlet 254 and a second outlet 256 formed at each end of the adapter body 250 such that the first outlet 254 communicates with the second outlet 256 through the passage 252. In FIG. 3, the first outlet 254 of the adapter body 250 is inserted into the first bore 102 of the primary block 100 such that the passage 252 formed in the adapter body 250 communicates with the first bore 102 of the primary block 100, which is defined as the fluid channel. The second outlet 256 is generally connected with a second tube or hose 14 for making a secure connection (i.e., a fluid tight connection) in a fluid line system.

Further, as shown in FIGS. 2-3, the second outlet 256 of the adapter body 250 receives the second tube 14 to be connected by a firmly bonded manner, in particular by a laser welding, a spin welding, and other adhesive materials such that the second tube 14 is inserted into the second outlet 256, and is securely connected to the adapter body 250. While the first and second openings formed in the adapter body 250 have both been labelled as 'outlets', the skilled artisan will recognize that one or both openings could be considered to be 'inlets' such that each of the openings 254 and 256 of the adapter body 250 will be referred to herein an outlet for simplicity, but may also be considered to be an inlet based on the chosen arrangement in the block fitting device 10.

In FIG. 2, the first outlet 254 has a first end 253 and a second end 255 extending from the first end 253 along the longitudinal axis X. Further, the adapter body 250 includes an adapter bead 258 radially and outwardly formed around the first end 253 of the first outlet 254. As shown in FIGS. 2 and 3, the adapter bead 258 has a first surface 257 faced to the stepped annular surface 116 of the primary block 100 and a second surface 259 faced to an inner surface 206 of the mating block 200 in an assembled configuration of the block fitting device 10.

The adapter body 250 is formed of polymer materials such as polyamide (PA), for example polyamide 612 (PA 612), PA 6, PA 12, and also PPA, PPS, etc. Also, to increase the strength and/or mechanical stability, the plastic material can be provided with fiber reinforcement such as glass fibers such that the adapter body 250 is formed with a pressure-resistant plastic material. Further, it is also possible to have a resin-based plastic material. The resin-based plastic materials result in hard, glass-like components, which are firmly three-dimensionally cross-linked via chemical bonds. This type of materials have a high thermomechanical strength in conjunction with a low density.

In addition, as shown in FIG. 3, the second tube 14 combined with the adapter body 250 in the block fitting device 10 is also made from a plastic material, which is selected from the materials, which are connectable or weldable with the adapter body 250, for example polyamide (PA). Further, the adapter body 250 of the block fitting device 10 is usually combined with multilayer tubes with outer (or inner) layer of materials, which are compatible with regard to welding (e.g., laser welding or spin welding). However, even though the polyamide (PA) is used for the adapter body 250, and the tube, each of the polyamide (PA) materials used in both parts might be different. In the fluid line system, the tube can be a single or multilayer tube, which is generally made of Polyamide (PA 6, PA 12, PA 612, semi-aromatic polyamide (PA 9T), HDPE, PP, etc.), which is weldable with the adaptor body. However, the adaptor body is generally made of PA12 (with max 30% glass fiber reinforcements), PPA (Polyphthalamide) or PP (Polypropylene). This results in comparable mechanical and chemical properties. The block fitting device of the present disclosure is illustrated in connection with a fluid line system such as an air conditioning system or a cooling system, etc. in a motor vehicle including an electric vehicle and a hybrid vehicle. As an example, the block fitting device 10 of the present disclosure is used in an air conditioning system having a compressor, a condenser, heat exchangers, evaporators, and also midline connections. In particular, the block fitting device 10 is provided for the air conditioning system having a low weight, and having a durable and tight connection of the components of the air conditioning system in the vehicles (i.e., inhibiting leak in the connection of the components). However, the block fitting device 10 of the present disclosure is not limited and is also used in other fluid line systems such as cooling systems (e.g., coolant circuits), valve units, pump units, etc. Further, for example, the primary block 100 might be a part or a component of any fluid line systems (e.g., refrigerant or coolant circuit) in the vehicle.

Referring back to FIGS. 1 through 3, the fitting block device 10 having the primary block 100 and the mating block 200 that are configured to be mated to one another. Similar to the primary block 100, the mating block 200 includes a first mating bore 202 and a second mating bore 204 having substantially cylindrical cross-section that extends through the thickness of the mating block 200. The second mating bore 204 is laterally spaced from the first mating bore 202, i.e. relative to the longitudinal axis X. In the assembled configuration of the block fitting device 10, as shown in FIG. 3, the first mating bore 202 of the mating block 200 and the first bore 102 of the primary block 100 are aligned along the longitudinal axis X such that the first mating bore 202 of the mating block 200 is securely coupled with the adapter body 250. Further, in the assembled configuration of the block fitting device 10, the second outlet 256 of the adapter body 250 is disposed inside the first mating bore 202 of the mating block 200 such that a second radial outer surface 260 of the second outlet 256 is coupled with the first mating bore 202 of the mating block 200. As shown in FIG. 3, for example, an end of the second outlet 256 extends to pass through the thickness of the mating block 200 to receive a second tube 14. In addition, the second surface 259 of the adapter bead 258 is entirely in contact with and also fully coupled to the inner surface 206 of the mating block 200 in the assembled configuration of the block fitting device 10.

In FIG. 3, the second bore 104 of the primary block 100 and the second mating bore 204 of the mating block 200 are used to secure the primary block 100 and the mating block 200 including the adapter body 250 in the block fitting device 10. In the assembled configuration of the block fitting device 10, the second bore 104 of the primary block 100 is threaded to allow the fastening member 16 such as a screw to tightly hold the mating block 200 against the primary block 100 (see FIG. 1). Further, the primary block 100 and the mating block 200 is made of a metallic material such as an aluminum or a polymer material. In particular, the material of the primary and mating blocks 100 and 200 is rigid and has a high stress capacity such that the material of the primary and mating blocks 100 and 200 inhibits plastic deformation by limiting creep caused by the joint assembly torque.

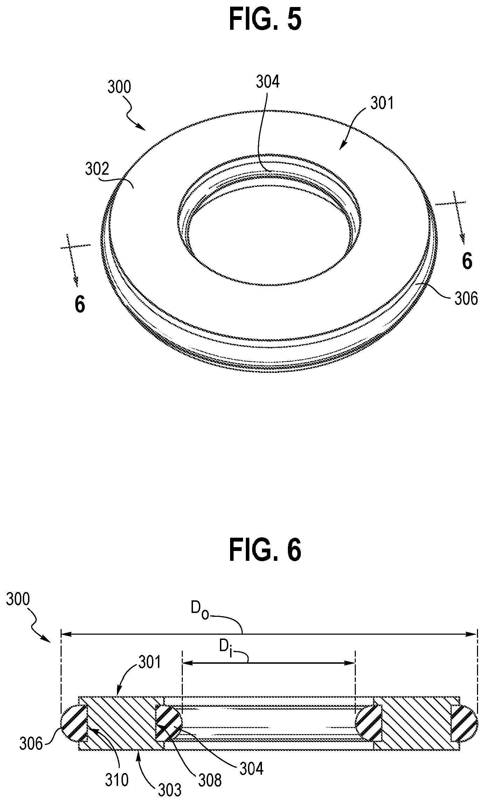

In FIGS. 2 and 3, the block fitting device 10 includes a seal washer 300 having a body portion 302 with a first plane surface 301 and a second plane surface 303 in the shape of a flat annular ring. Referring to FIGS. 5 and 6, the seal washer 300 further includes an inner seal member 304 attached radially along an inner circumference of the body portion 302 and an outer seal member 306 attached radially along an outer circumference of the body portion 302 such that the body portion 302 and the inner and outer seal members 304 and 306 are formed as a single unit.

In the cross-sectional view of FIG. 6, the body portion 302 of the seal washer 300 is substantially shaped as an H-ring having an inner radial channel 308 and an outer radial channel 310 to receive the inner and outer seal members 304 and 306, respectively. Further, the body portion 302 of the seal washer 300 is made of a metallic material such as an aluminum or a polymer material such as a PA 6, and the inner and outer seal members 304 and 306 of the seal washer 300 are each formed of an elastomeric material such as a rubber or an elastic material such as a silicon. However, it is understood that other materials for the sealing could be used as desired. The seal washer 300 having the materials as described above is configured to reduce permeation of the system fluid between the primary block 100 and the adapter body 250 in the assembled configuration of the block fitting device 10.

As shown in FIG. 3, the seal washer 300 is placed in a space defined between the primary block 100 and the adapter body 250 to seal the fluid channel of the block fitting device 10. In the assembled configuration of the block fitting device 10, the first plane surface 301 of the body portion 302 is faced to the stepped annular surface 116 of the primary block 100, and the second plane surface 303 of the body portion 302 is faced to the first surface 257 of the adapter bead 258. As shown in FIGS. 3 and 4, a first radial gap 18 is defined between the primary block 100 and the seal washer 300 and a second radial gap 20 is defined between the adapter body 250 and the seal washer 300, which are substantially perpendicular to the longitudinal direction of the block fitting device 10. Further, as shown in FIG. 3, in the assembled configuration of the block fitting device 10, the inner and outer seal members 304 and 306 are deformably contacted with the primary block 100 and the adapter body 250 respectively such that the inner and outer seal members 304 and 306 of the seal washer 300 are configured to seal the fluid channel defined between the primary block 100 and the adapter body 250 in a radial direction relative to the longitudinal axis X.

Further, the outer diametric dimension *Dₒ* about the outer edge of the outer seal member 306 is slightly larger than the diametric dimension *Dₐ* of the stepped annular surface 116 formed around the inward directed step 114 of the primary block 100, and the inner diametric dimension *Dᵢ* about the outer edge of the inner seal member 304 is slightly smaller than the diametric dimension *Dᵣ* of the first radial outer surface 262 of the adapter body 250. Accordingly, in the assembled configuration of the block fitting device 10, when the seal washer 300 is disposed radially between an inner radial surface 118 of the primary block 100 and the first radial outer surface 262 of the adapter body 250, it is retained by frictional engagement between the primary block 100 and the adapter body 250 in a radial direction relative to the longitudinal axis X.

FIG. 4 shows a detailed sectional view having the primary block 100, the mating block 200, the adapter body 250, and the seal washer 300 in the assembled configuration of the block fitting device 10. In FIG. 4, the outer seal member 306 of the seal washer 300 deformably and frictionally engages with the inner radial surface 118 of the inward directed step 114 such that the outer seal member 306 is in a sealing contact with the inner radial surface 118 of the primary block 100 in the radial direction. Also, the inner seal member 304 of the seal washer 300 deformably and frictionally engages with the first radial outer surface 262 of the first outlet 254 formed in the adapter body 250 such that the inner seal member 304 is in a sealing contact with the first radial outer surface 262 of the adapter body 200 in the radial direction. Accordingly, the seal washer 300 frictionally and deformably retained with the primary block 100 and the adapter body 250 in the radial direction relative to the longitudinal axis X can eliminate the need for the torque dependent sealing method along the longitudinal axis X (i.e., in an axial direction of the block fitting device 10). Further, as shown in FIG. 4, the seal washer 300 having the inner seal member 304 and the outer seal member 306 is disposed in the space defined between the primary block 100 and the adapter body 250 along the longitudinal axis X to provide enhanced resistance to leakage of the system fluid in the fluid channel formed inside the block fitting device 10.

Referring back to FIGS. 1 and 2, to securely assemble the block fitting device 10, the primary block 100, the adapter body 250 and the mating block 200 are connected with the fastening member 16 such as a screw inserted through the second mating bore 204 of the mating block 200 and securely tightened in the second bore 104 of the primary block 100. When the block fitting device 10 is assembled, the seal washer 300 is disposed radially between the primary block 100 and the adapter body 250 in the longitudinal direction of the block fitting device 10. Further, the seal washer 300 having the inner and outer seal members 304 and 306 is frictionally retained between the inner radial surface 118 of the primary block 100 and the first radial outer surface 262 of the adapter body 250 in the radial direction relative to the longitudinal axis X of the block fitting device 10. Once assembled, as shown in FIGS. 1 and 3, the primary block 100, the mating block 200, and the adapter body 250 cooperate with the seal washer 300 to form a fluid tight seal, and inhibit leakage of the fluid (liquid or gas) flowing from the tubes 12 and 14.

As shown in FIGS. 4 and 5, because the body portion 302 of the seal washer 300 is made of the metallic material or a polymeric material, the first and second plane surfaces 301 and 303 of the body portion 302 are configured to inhibit the system fluid from passing through the thickness of the body portion 302 as a permeation barrier. Due to the permeation barrier of the body portion 302, the cross-sectional area of the elastomeric seal, which is formed with the inner and outer seal members 304 and 306 is reduced such that the permeation area of the system fluid in the seal washer 300 is also reduced. Accordingly, the seal washer 300 used in the exemplary block fitting device 10 of the present disclosure is configured to increase the performance of the fluid tight connection in the fluid line system. As described above, further, due to the radial sealing of the inner and outer seal members 304 and 306 formed in the seal washer 300, it also eliminates the need for torque dependent seals along the longitudinal direction of the block fitting device 10 (i.e., the axial direction of the block fitting device) such that the seal washer 300 is configured to reduce the likelihood for creep of the components in the fitting block device 10.

The block fitting device 10 according to the exemplary embodiment of the present disclosure, is suitable for various fluid line systems such as an air conditioning system or a cooling system in motor vehicles including electric vehicles and hybrid vehicles, etc. For example, the block fitting device 10 is suitable for cooling systems of the hybrid or electric vehicles having cooling/tempering electronic components such as batteries and also air conditioning systems. Further, the fluid line systems used in the vehicles should be lightweight as much as possible, but the fluid line systems are also provided with stable connections among the components because of the vibrations and shocks while the vehicles are operated. Accordingly, the block fitting device 10 of the present disclosure makes it possible to produce a stable and durable connection with a light weight.

## Claims

1. A block fitting device (10) for making a secure connection in a fluid line system, the block fitting device (10) comprising:
an adapter body (250) having a passage (252) with two outlets (254, 256) and an adapter bead (258) radially and outwardly formed around the adapter body (250);
a primary block (100) formed with at least one bore (102, 104) along a longitudinal axis and an inward directed step around the at least one bore (102, 104) to receive the adapter body (250) such that the primary block (100) and the adapter body (250) are joined together, and the at least one bore (102, 104) and the passage (252) are aligned and communicated to define a fluid channel along the longitudinal axis;
a mating block (200) having at least one mating bore (202, 204), the mating block (200) securely coupled with the primary block (100) and the adapter body (250); and
a seal washer (300) having an inner seal member (304) and an outer seal member (306), the seal washer (300) placed in the inward directed step for a sealing contact with the adapter body (250) and the primary block (100) in an assembled configuration, **characterized in that** the seal washer (300) includes a body portion (302) having an inner radial channel (308) to receive the inner seal member (304) and an outer radial channel (310) to receive the outer seal member (306).

2. The block fitting device of claim 1, wherein the inward directed step (114) of the primary block (100) includes a stepped annular surface (116) radially formed around a first bore (102) and an inner radial surface (118) formed substantially perpendicular to the stepped annular surface (116).

3. The block fitting device of claim 2, wherein the stepped annular surface (116) defines a diametric dimension greater than a diametric dimension of the first bore (102).

4. The block fitting device of claim 1, wherein, in the assembled configuration, the seal washer (300) is disposed between a stepped annular surface (116) formed in the inward directed step (114) and a first surface (257) of the adapter bead (258) along the longitudinal axis.

5. The block fitting device of claim 1, wherein the inner seal member of the seal washer (300) is frictionally engaged with a first radial outer surface (262) of the adapter body (250) and the outer seal member (306) of the seal washer (300) is frictionally engaged with an inner radial surface (118) formed in the inward directed step (114) of the primary block (100) such that the seal washer (300) is adapted to seal the fluid channel in a radial direction relative to the longitudinal axis.

6. The block fitting device of claim 5, wherein an outer diametric dimension about an outer edge of the outer seal member (306) is larger than a diametric dimension of a stepped annular surface (116), and an inner diametric dimension about an outer edge of the inner seal member (304) is smaller than a diametric dimension of the first radial outer surface (262) of the adapter body (250).

7. The block fitting device of claim 5, wherein, in the assembled configuration, the block fitting device (10) has a first radial gap (20) defined between a stepped annular surface (116) of the primary block (100) and a first plane surface (301) of the seal washer (300), and a second radial gap (20) define between a second plane surface (303) of the seal washer (300) and a first surface (257) of the adapter bead (258).

8. The block fitting device of claim 1, wherein the seal washer (300) has a body portion formed (302) of a metallic material or a polymer material, and the inner and outer seal members (304, 306) of the seal washer (300) are each formed of an elastomeric material.

9. The block fitting device of claim 1, wherein, in the assembled configuration, a first outlet (254) of the adapter body (250) is inserted into a first bore (102) of the primary block (100) to connect with the passage (252) of the adapter body (250), defined as the fluid channel along the longitudinal axis.

10. The block fitting device of claim 1, wherein, in the assembled configuration, the adapter bead (258) of the adapter body (250) is positioned in the inward directed step (114) of the primary block (100) such that the first surface (257) of the adapter bead (258) is faced substantially parallel to a stepped annular surface (116) of the primary block (100).

11. The block fitting device of claim 1, wherein the primary block (100) includes a first aperture (106) extending from a planar outer end surface (110) and receiving a first tube (12) in a firmly bonded manner, and a second aperture (108) having the inward directed step (114) formed in a planar inner end surface (112).

12. A method of assembling a block fitting device (10) according to claim 1 for making a secure connection in a fluid line system, the method comprising the steps of:
providing an adapter body (250) formed with a passage (252) with at least two outlets (254, 256) and an adapter bead (258);
providing a primary block (100) formed with a first bore (102) along a longitudinal axis and an inward directed step (114) formed around the first bore (102);
providing a seal washer (300) having an inner seal member (304) and an outer seal member (306);
placing the seal washer (300) between the primary block (100) and the adapter body (250) along the longitudinal axis;
inserting a first outlet (254) of the adapter body (250) into the first bore (102) of the primary block (100) such that the first bore (102) and the passage (252) are aligned and communicated to define a fluid channel along the longitudinal axis;
providing a mating block (200) having at least one mating bore (204); and
coupling securely a second outlet (256) of the adapter body (250) with a first mating bore (202) of the mating block (200);
**characterized in that**, in an assembled configuration of the block fitting device (10), the seal washer (300) is disposed in a sealing contact with the adapter body (250) and the primary block (100) in a radial direction relative to the longitudinal axis.

13. The method of claim 12, further includes the step of inserting a fastening member (16) through a second mating bore (204) formed in the mating block (200) to be securely tightened in a second bore (104) formed in the primary block (100).

14. The method of claim 12, wherein the step of placing the seal washer between the primary block (100) and the adapter body (250) along the longitudinal axis includes the step of placing the seal washer (300) around the first outlet (254) of the adapter body (250) such that the inner seal member (304) of the seal washer (300) is frictionally engaged with the first outlet (254) of the adapter body (250).

15. The method of claim 12, wherein, when the adapter body with the seal washer (300) is inserted into the first bore (102) of the primary block (100), the outer seal member (306) of the seal washer (300) is frictionally engaged with an inner radial surface (118) formed in the inward directed step (114).

16. The method of claim 12, further includes the step of inserting a first tube (12) into a first aperture formed (106) in the primary block (100) to be connected in a firmly bonded manner.

17. The method of claim 12, further includes the step of inserting a second tube into a second outlet (14) formed in the adapter body (250) to be connected in a firmly bonded manner.

## Patentansprüche

1. Blockanschlussvorrichtung (10) zum Herstellen einer sicheren Verbindung in einem Fluidleitungssystem, die Blockanschlussvorrichtung (10) umfassend:
einen Adapterkörper (250) mit einem Durchgang (252) mit zwei Auslässen (254, 256) und einem Adapterwulst (258), der radial und nach außen um den Adapterkörper (250) herum ausgebildet ist;
einen Primärblock (100), der mit mindestens einer Bohrung (102, 104) entlang einer Längsachse und eine nach innen gerichtete Stufe um die mindestens eine Bohrung (102, 104) ausgebildet ist, um den Adapterkörper (250) aufzunehmen, so dass der Primärblock (100) und der Adapterkörper (250) miteinander verbunden sind, und die mindestens eine Bohrung (102, 104) und der Durchgang (252) ausgerichtet sind und in Verbindung stehen, um einen Fluidkanal entlang der Längsachse zu definieren;
einen Gegenblock (200) mit mindestens einer Gegenbohrung (202, 204), wobei der Gegenblock (200) sicher mit dem Primärblock (100) und dem Adapterkörper (250) gekoppelt ist; und
eine Dichtungsscheibe (300) mit einem inneren Dichtungselement (304) und einem äußeren Dichtungselement (306), wobei die Dichtungsscheibe (300) in der nach innen gerichteten Stufe für einen Dichtkontakt mit dem Adapterkörper (250) und dem Primärblock (100) in einer zusammengebauten Konfiguration angeordnet ist, **dadurch gekennzeichnet, dass** die Dichtungsscheibe (300) einen Körperabschnitt (302) mit einem inneren radialen Kanal (308) zur Aufnahme des inneren Dichtungselements (304) und einem äußeren radialen Kanal (310) zur Aufnahme des äußeren Dichtungselements (306) einschließt.

2. Blockanschlussvorrichtung nach Anspruch 1, wobei die nach innen gerichtete Stufe (114) des Primärblocks (100) eine abgestufte ringförmige Oberfläche (116) einschließt, die radial um eine erste Bohrung (102) ausgebildet ist, und eine innere radiale Oberfläche (118), die im Wesentlichen senkrecht zu der abgestuften ringförmigen Oberfläche (116) ausgebildet ist.

3. Blockanschlussvorrichtung nach Anspruch 2, wobei die abgestufte ringförmige Oberfläche (116) eine Durchmesserabmessung definiert, die größer ist als eine Durchmesserabmessung der ersten Bohrung (102).

4. Blockanschlussvorrichtung nach Anspruch 1, wobei in der zusammengebauten Konfiguration die Dichtungsscheibe (300) zwischen einer abgestuften ringförmigen Oberfläche (116), die in der nach innen gerichteten Stufe (114) ausgebildet ist, und einer ersten Oberfläche (257) des Adapterwulstes (258) entlang der Längsachse angeordnet ist.

5. Blockanschlussvorrichtung nach Anspruch 1, wobei das innere Dichtungselement der Dichtungsscheibe (300) reibschlüssig mit einer ersten radialen äußeren Oberfläche (262) des Adapterkörpers (250) in Eingriff steht und das äußere Dichtungselement (306) der Dichtungsscheibe (300) reibschlüssig mit einer inneren radialen Oberfläche (118) in Eingriff steht, die in der nach innen gerichteten Stufe (114) des Primärblocks (100) ausgebildet ist, so dass die Dichtungsscheibe (300) dazu angepasst ist, den Fluidkanal in einer radialen Richtung relativ zu der Längsachse abzudichten.

6. Blockanschlussvorrichtung nach Anspruch 5, wobei eine äußere Durchmesserabmessung um einen äußeren Rand des äußeren Dichtungselements (306) größer ist als eine Durchmesserabmessung einer abgestuften ringförmigen Oberfläche (116), und eine innere Durchmesserabmessung um einen äußeren Rand des inneren Dichtungselements (304) kleiner ist als eine Durchmesserabmessung der ersten radialen äußeren Oberfläche (262) des Adapterkörpers (250).

7. Blockanschlussvorrichtung nach Anspruch 5, wobei in der zusammengebauten Konfiguration die Blockanschlussvorrichtung (10) einen ersten radialen Spalt (20) aufweist, der zwischen einer abgestuften ringförmigen Oberfläche (116) des Primärblocks (100) und einer ersten ebenen Oberfläche (301) der Dichtungsscheibe (300) definiert ist, und einen zweiten radialen Spalt (20), der zwischen einer zweiten ebenen Oberfläche (303) der Dichtungsscheibe (300) und einer ersten Oberfläche (257) des Adapterwulstes (258) definiert ist.

8. Blockanschlussvorrichtung nach Anspruch 1, wobei die Dichtungsscheibe (300) einen Körperabschnitt (302) aufweist, der aus einem metallischen Material oder einem polymeren Material ausgebildet ist, und die inneren und äußeren Dichtungselemente (304, 306) der Dichtungsscheibe (300) jeweils aus einem elastomeren Material ausgebildet sind.

9. Blockanschlussvorrichtung nach Anspruch 1, wobei in der zusammengebauten Konfiguration ein erster Auslass (254) des Adapterkörpers (250) in eine erste Bohrung (102) des Primärblocks (100) eingesetzt ist, um sich mit dem Durchgang (252) des Adapterkörpers (250), der als der Fluidkanal entlang der Längsachse definiert ist, zu verbinden.

10. Blockanschlussvorrichtung nach Anspruch 1, wobei in der zusammengebauten Konfiguration der Adapterwulst (258) des Adapterkörpers (250) in der nach innen gerichteten Stufe (114) des Primärblocks (100) positioniert ist, so dass die erste Oberfläche (257) des Adapterwulstes (258) im Wesentlichen parallel zu einer abgestuften ringförmigen Oberfläche (116) des Primärblocks (100) ausgerichtet ist.

11. Blockanschlussvorrichtung nach Anspruch 1, wobei der Primärblock (100) eine erste Öffnung (106) einschließt, die sich von einer ebenen äußeren Endoberfläche (110) erstreckt und ein erstes Rohr (12) in fest verbundener Weise aufnimmt, und eine zweite Öffnung (108), die die nach innen gerichteten Stufe (114) aufweist, die in einer ebenen inneren Endoberfläche (112) ausgebildet ist.

12. Verfahren zum Zusammenbauen einer Blockanschlussvorrichtung (10) nach Anspruch 1 zum Herstellen einer sicheren Verbindung in einem Fluidleitungssystem, das Verfahren umfassend die Schritte:
Bereitstellen eines Adapterkörpers (250), der mit einem Durchgang (252) mit mindestens zwei Auslässen (254, 256) und einem Adapterwulst (258) ausgebildet ist;
Bereitstellen eines Primärblocks (100), der mit einer ersten Bohrung (102) entlang einer Längsachse und einer nach innen gerichteten Stufe (114) ausgebildet ist, die um die erste Bohrung (102) herum ausgebildet ist;
Bereitstellen einer Dichtungsscheibe (300) mit einem inneren Dichtungselement (304) und einem äußeren Dichtungselement (306);
Anordnen der Dichtungsscheibe (300) zwischen dem Primärblock (100) und dem Adapterkörper (250) entlang der Längsachse;
Einsetzen eines ersten Auslasses (254) des Adapterkörpers (250) in die erste Bohrung (102) des Primärblocks (100), so dass die erste Bohrung (102) und der Durchgang (252) ausgerichtet sind und in Verbindung stehen, um einen Fluidkanal entlang der Längsachse zu definieren;
Bereitstellen eines Gegenblocks (200) mit mindestens einer Gegenbohrung (204); und
sicheres Koppeln eines zweiten Auslasses (256) des Adapterkörpers (250) mit einer ersten Gegenbohrung (202) des Gegenblocks (200);
**dadurch gekennzeichnet, dass** in einer zusammengebauten Konfiguration der Blockanschlussvorrichtung (10) die Dichtungsscheibe (300) in einem Dichtkontakt mit dem Adapterkörper (250) und dem Primärblock (100) in einer radialen Richtung relativ zur Längsachse angeordnet ist.

13. Verfahren nach Anspruch 12, das ferner den Schritt des Einführens eines Befestigungselements (16) durch eine zweite Gegenbohrung (204), die in dem Gegenblock (200) ausgebildet ist, einschließt, um sicher in einer zweiten Bohrung (104), die in dem Primärblock (100) ausgebildet ist, festgezogen zu werden.

14. Verfahren nach Anspruch 12, wobei der Schritt des Platzierens der Dichtungsscheibe zwischen dem Primärblock (100) und dem Adapterkörper (250) entlang der Längsachse den Schritt des Platzierens der Dichtungsscheibe (300) um den ersten Auslass (254) des Adapterkörpers (250) einschließt, so dass das innere Dichtungselement (304) der Dichtungsscheibe (300) reibschlüssig mit dem ersten Auslass (254) des Adapterkörpers (250) in Eingriff steht.

15. Verfahren nach Anspruch 12, wobei, wenn der Adapterkörper mit der Dichtungsscheibe (300) in die erste Bohrung (102) des Primärblocks (100) eingesetzt wird, das äußere Dichtungselement (306) der Dichtungsscheibe (300) reibschlüssig mit einer inneren radialen Oberfläche (118) in Eingriff steht, die in der nach innen gerichteten Stufe (114) ausgebildet ist.

16. Verfahren nach Anspruch 12, das ferner den Schritt des Einsetzens eines ersten Rohrs (12) in eine erste Öffnung (106), die in dem Primärblock (100) ausgebildet ist, einschließt, um in einer fest verbundenen Weise verbunden zu werden.

17. Verfahren nach Anspruch 12, das ferner den Schritt des Einsetzens eines zweiten Rohrs in einen zweiten Auslass (14) einschließt, der in dem Adapterkörper (250) ausgebildet ist, um in einer fest verbundenen Weise verbunden zu werden.

## Revendications

1. Dispositif de montage de bloc (10) permettant d'établir un raccordement sécurisé dans un système de conduite de fluide, le dispositif de montage de bloc (10) comprenant :
un corps d'adaptateur (250) ayant un passage (252) avec deux sorties (254, 256) et un bourrelet d'adaptateur (258) formé radialement et vers l'extérieur autour du corps d'adaptateur (250) ;
un bloc primaire (100) formé avec au moins un alésage (102, 104) le long d'un axe longitudinal et avec une marche dirigée vers l'intérieur autour de l'au moins un alésage (102, 104) pour recevoir le corps d'adaptateur (250) de telle sorte que le bloc primaire (100) et le corps d'adaptateur (250) soient joints ensemble, et que l'au moins un alésage (102, 104) et le passage (252) soient alignés et se communiquent pour définir un canal de fluide le long de l'axe longitudinal ;
un bloc d'accouplement (200) ayant au moins un alésage d'accouplement (202, 204), le bloc d'accouplement (200) étant solidement accouplé au bloc primaire (100) et au corps d'adaptateur (250) ; et
une rondelle d'étanchéité (300) ayant un élément d'étanchéité interne (304) et un élément d'étanchéité externe (306), la rondelle d'étanchéité (300) étant mise dans la marche dirigée vers l'intérieur pour assurer un contact étanche avec le corps d'adaptateur (250) et le bloc primaire (100) dans une configuration assemblée, **caractérisé en ce que** la rondelle d'étanchéité (300) comporte une partie de corps (302) ayant un canal radial interne (308) pour recevoir l'élément d'étanchéité interne (304) et un canal radial externe (310) pour recevoir l'élément d'étanchéité externe (306).

2. Dispositif de montage de bloc selon la revendication 1, dans lequel la marche dirigée vers l'intérieur (114) du bloc primaire (100) comporte une surface annulaire étagée (116) formée radialement autour d'un premier alésage (102) et une surface radiale interne (118) formée sensiblement perpendiculairement à la surface annulaire étagée (116).

3. Dispositif de montage de bloc selon la revendication 2, dans lequel la surface annulaire étagée (116) définit une dimension diamétrale supérieure à une dimension diamétrale du premier alésage (102).

4. Dispositif de montage de bloc selon la revendication 1, dans lequel, dans la configuration assemblée, la rondelle d'étanchéité (300) est disposée entre une surface annulaire étagée (116) formée dans la marche dirigée vers l'intérieur (114) et une première surface (257) du bourrelet d'adaptateur (258) le long de l'axe longitudinal.

5. Dispositif de montage de bloc selon la revendication 1, dans lequel l'élément d'étanchéité interne de la rondelle d'étanchéité (300) vient en prise par friction avec une première surface externe radiale (262) du corps d'adaptateur (250) et l'élément d'étanchéité externe (306) de la rondelle d'étanchéité (300) vient en prise par friction avec une surface radiale interne (118) formée dans la marche dirigée vers l'intérieur (114) du bloc primaire (100) de telle sorte que la rondelle d'étanchéité (300) soit conçue pour obturer le canal de fluide dans une direction radiale par rapport à l'axe longitudinal.

6. Dispositif de montage de bloc selon la revendication 5, dans lequel une dimension diamétrale externe autour d'un bord externe de l'élément d'étanchéité externe (306) est supérieure à une dimension diamétrale d'une surface annulaire étagée (116), et une dimension diamétrale interne autour d'un bord externe de l'élément d'étanchéité interne (304) est inférieure à une dimension diamétrale de la première surface externe radiale (262) du corps d'adaptateur (250).

7. Dispositif de montage de bloc selon la revendication 5, dans lequel, dans la configuration assemblée, le dispositif de montage de bloc (10) a un premier espace radial (20) défini entre une surface annulaire étagée (116) du bloc primaire (100) et une première surface plane (301) de la rondelle d'étanchéité (300), et un second espace radial (20) défini entre une seconde surface plane (303) de la rondelle d'étanchéité (300) et une première surface (257) du bourrelet d'adaptateur (258).

8. Dispositif de montage de bloc selon la revendication 1, dans lequel la rondelle d'étanchéité (300) a une partie de corps (302) formée d'un matériau métallique ou d'un matériau polymère, et les éléments d'étanchéité interne et externe (304, 306) de la rondelle d'étanchéité (300) sont chacun formés d'un matériau élastomère.

9. Dispositif de montage de bloc selon la revendication 1, dans lequel, dans la configuration assemblée, une première sortie (254) du corps d'adaptateur (250) est insérée dans un premier alésage (102) du bloc primaire (100) pour se raccorder au passage (252) du corps d'adaptateur (250), défini comme le canal de fluide le long de l'axe longitudinal.

10. Dispositif de montage de bloc selon la revendication 1, dans lequel, dans la configuration assemblée, le bourrelet d'adaptateur (258) du corps d'adaptateur (250) est positionné dans la marche dirigée vers l'intérieur (114) du bloc primaire (100) de telle sorte que la première surface (257) du bourrelet d'adaptateur (258) soit orientée sensiblement parallèlement à une surface annulaire étagée (116) du bloc primaire (100).

11. Dispositif de montage de bloc selon la revendication 1, dans lequel le bloc primaire (100) comporte une première ouverture (106) s'étendant à partir d'une surface d'extrémité externe plane (110) et recevant un premier tube (12) de manière fermement liée, et une seconde ouverture (108) ayant la marche dirigée vers l'intérieur (114) formé dans une surface d'extrémité interne plane (112).

12. Procédé d'assemblage d'un dispositif de montage de bloc (10) selon la revendication 1 permettant d'établir un raccordement sécurisé dans un système de conduite de fluide, le procédé comprenant les étapes consistant à :
fournir un corps d'adaptateur (250) formé avec un passage (252) avec au moins deux sorties (254, 256) et un bourrelet d'adaptateur (258) ;
fournir un bloc primaire (100) formé avec un premier alésage (102) le long d'un axe longitudinal et une marche dirigée vers l'intérieur (114) formée autour du premier alésage (102) ;
fournir une rondelle d'étanchéité (300) ayant un élément d'étanchéité interne (304) et un élément d'étanchéité externe (306) ;
mettre la rondelle d'étanchéité (300) entre le bloc primaire (100) et le corps d'adaptateur (250) le long de l'axe longitudinal ;
insérer une première sortie (254) du corps d'adaptateur (250) dans le premier alésage (102) du bloc primaire (100) de telle sorte que le premier alésage (102) et le passage (252) soient alignés et se communiquent pour définir un canal de fluide le long de l'axe longitudinal ;
fournir un bloc d'accouplement (200) ayant au moins un alésage d'accouplement (204) ; et
accoupler solidement une seconde sortie (256) du corps d'adaptateur (250) à un premier alésage d'accouplement (202) du bloc d'accouplement (200) ;
**caractérisé en ce que,** dans une configuration assemblée du dispositif de montage de bloc (10), la rondelle d'étanchéité (300) est disposée en contact étanche avec le corps d'adaptateur (250) et le bloc primaire (100) dans une direction radiale par rapport à l'axe longitudinal.

13. Procédé selon la revendication 12, comporte en outre l'étape consistant à insérer un élément de fixation (16) à travers un second alésage d'accouplement (204) formé dans le bloc d'accouplement (200) pour être solidement serré dans un second alésage (104) formé dans le bloc primaire (100).

14. Procédé selon la revendication 12, dans lequel l'étape consistant à mettre la rondelle d'étanchéité entre le bloc primaire (100) et le corps d'adaptateur (250) le long de l'axe longitudinal comporte l'étape consistant à mettre la rondelle d'étanchéité (300) autour de la première sortie (254) du corps d'adaptateur (250) de telle sorte que l'élément d'étanchéité interne (304) de la rondelle d'étanchéité (300) vienne en prise par friction avec la première sortie (254) du corps d'adaptateur (250).

15. Procédé selon la revendication 12, dans lequel, lorsque le corps d'adaptateur avec la rondelle d'étanchéité (300) est inséré dans le premier alésage (102) du bloc primaire (100), l'élément d'étanchéité externe (306) de la rondelle d'étanchéité (300) vient en prise par friction avec une surface radiale interne (118) formée dans la marche dirigée vers l'intérieur (114).

16. Procédé selon la revendication 12, comporte en outre l'étape consistant à insérer un premier tube (12) dans une première ouverture (106) formée dans le bloc primaire (100) pour être raccordé de manière fermement liée.

17. Procédé selon la revendication 12, comporte en outre l'étape consistant à insérer un second tube dans une seconde sortie (14) formée dans le corps d'adaptateur (250) pour être raccordé de manière fermement liée.
